# EUROPEAN PATENT SPECIFICATION

(11) **EP 0 516 888 B1**
(45) Date of publication and mention of the grant of the patent: **06.10.1993**
(21) Application number: 91201356.2
(22) Date of filing: 04.06.1991
(51) Int. Cl.: A22C 21/06

(54) **Device for clearing the neck skin of slaughtered poultry**
Vorrichtung zur Reinigung der Halshaut von Schlachtgeflügel
Dispositif de nettoyage de la chair du cou de volailles abattues

(43) Date of publication of application: 09.12.1992
(73) Proprietor: MACHINEFABRIEK MEYN B.V., NL-1511 AE Oostzaan (NL)
(72) Inventor: Meyn, Cornelis, NL-1511 AE Oostzaan (NL)
(74) Representative: Voncken, Bartholomeus Maria Christiaan

(56) References cited:
- EP-A- 0 162 154
- EP-A- 0 178 825
- EP-A- 0 404 235
- NL-A- 7 713 912
- US-A- 4 788 749

## Description

The present invention relates to a device for clearing the neck skin of slaughtered poultry comprising a mandrel being adapted to be rotated and forwardly displaced through the neck of the poultry provided with at least one row of teeth disposed axially behind each other and pointing obliquely forwards and in the direction of rotation of the mandrel, wherein the mandrel further comprises a foremost blunt end portion.

A device of this kind is known from European Patent specification 0178825. The foremost blunt end portion of the mandrel of this known device and the teeth are shaped such, that the point of each tooth is located on or within a cylindric surface defined by the circumference of the blunt end portion. As illustrated in the drawing of this patent specification, this means that the blunt end portion covers, when seeing the mandrel in a frontal view, the points of the teeth. As a result the end portion so to say clears the way for the mandrel during its forward movement through the poultry by pushing aside the collar bone so that the bone may slide of on the succeeding teeth without thereby being broken or damaged.

Particularly when processing large poultry, such as turkeys, this known device suffers from certain drawbacks. The crop and gullet of the turkey are rather firmly attached to the neck skin. Thus, by means of this known device a certain amount of turkeys will not be processed in a satisfactory way, for the crop and gullet will not be seized properly by the teeth, which are disposed axially behind each other and in a way are hidden behind each other. Simply bending the teeth outwardly would lead to a device that, during use, unacceptably damages the poultry to be processed.

It is an object of the invention to provide a device for clearing the neck skin of slaughtered poultry in which these drawbacks are eliminated in a simple, but nevertheless effective way.

According to the invention the device for clearing the neck skin of slaughtered poultry is characterized in that of each row of teeth the foremost tooth has a blunt point while the remaining teeth of each row are provided with a tapering point, whereas the blunt end portion of the mandrel is shaped such that, when seeing the mandrel in a frontal view, the point of at least each foremost tooth projects beyond the circumference of that blunt end portion.

As seen in a frontal view the point of at least each foremost tooth projects beyond the circumference of the blunt end portion, such that this foremost tooth can effectively engage the neck skin of the slaughtered poultry. However, because this specific tooth is provided with a blunt point the risk on damaging the neck skin is extremely minimized. However, the effective engagement of that tooth with the neck skin offers a sort of scraping action which already partially loosens the bird parts to be cleared from the neck skin, for example crop and gullet, such that these parts may be removed by the remaining tapered teeth in a very effective way.

According to a preferred embodiment of the device according to the invention each foremost tooth is provided with a flattened point, of which the flattening includes an angle of about 60° with the axis of the mandrel. It appeared, that with such an angle the device is extremely effective while reducing the risk on damages to a minimum.

In still a further embodiment the mandrel comprises two spaced axially extending metal strips of which one lateral edge is provided with the teeth and of which the opposite lateral edge is inwardly flanged. If the mandrel is shaped like this, according to still another preferred embodiment the blunt end portion of the mandrel is basically parallelogram-shaped.

The invention will be elucidated further referring to the drawings, in which an embodiment of the device according to the invention is illustrated.
Figure 1 shows a lateral view;
Figure 2 shows a section along line II-II in figure 1;
Figure 3 shows a view according to arrow III in figure 2, and
Figure 4 shows a frontal view according to arrow IV in figure 1.

The illustrated device for clearing the neck skin of slaughtered poultry comprises a mandrel 1 being adapted to be rotated and forwardly displaced through the neck of the poultry by an apparatus known per se and not shown here. At its top the mandrel 1 is provided with a threaded elongation 2 with which it can be attached to the apparatus for driving the device.

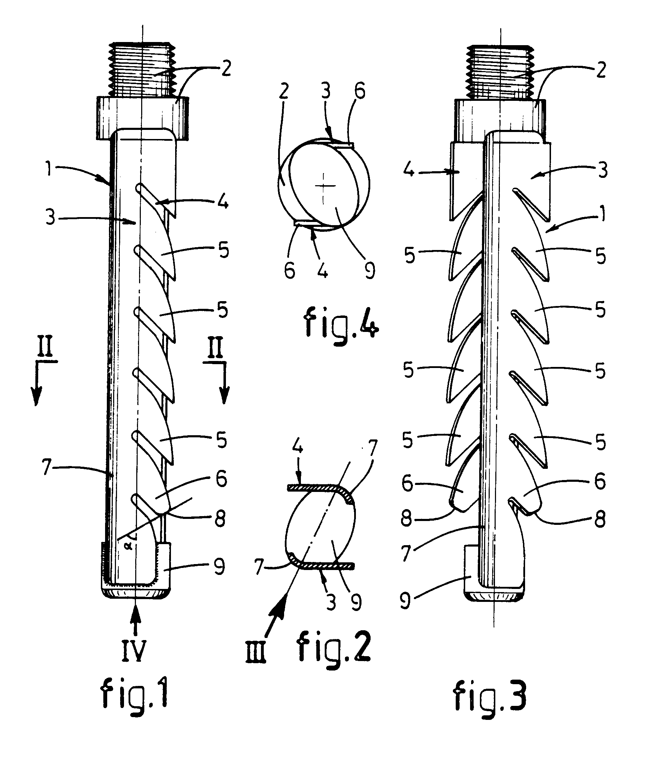

In the illustrated embodiment the mandrel comprises two spaced axially extending metal strips 3, 4, each of which comprises a lateral edge provided with teeth 5, 6, whereas the opposite lateral edge 7 is inwardly flanged (see figure 2).

As seen clearly in figure 1 and figure 3 the teeth are disposed axially behind each other in rows and point obliquely forwards. In use the mandrel 1 will be rotated such, that the teeth point obliquely forwards in the direction of rotation of the mandrel.

The teeth 5, 6, can be manufactured by slotting or cutting the strips 3, 4.

The foremost tooth 6 of each row of teeth 5, 6, has a blunt point 8 whereas the remaining teeth 5 are provided with a tapering point. In the illustrated embodiment each foremost tooth 6 is provided with a flattened point, of which the flattening includes an angle of about 60° with the axis of the mandrel (angle α in figure 1).

The mandrel 1 further comprises a foremost blunt end portion 9, which is shaped such that, when seeing the mandrel in a frontal view according to figure 4, the point 8 of the foremost teeth 6 projects beyond the circumference of the blunt end portion 9.

As illustrated in figure 2 the blunt end portion 9 of the mandrel 1 is basically parallelogram-shaped with rounded edges.

When introducing the mandrel 1 in a poultry body the blunt foremost end portion 9 on the one hand pushes the collar bone aside for easing the introduction of the mandrel and for avoiding damaging the collar. However, on the other hand the projecting foremost teeth 6 loosen the body parts to be removed such as crop and gullet, whereafter the remaining teeth 5 may grip these body parts for entirely removing them from the neck skin. Due to the blunt point 8 the foremost teeth 6 will not cause damages to the neck skin of the poultry.

## Claims

1. Device for clearing the neck skin of slaughtered poultry comprising a mandrel (1) being adapted to be rotated and forwardly displaced through the neck of the poultry provided with at least one row of teeth (5, 6) disposed axially behind each other and pointing obliquely forwards and in the direction of rotation of the mandrel, wherein the mandrel further comprises a foremost blunt end portion (9), **characterised** in that of each row of teeth the foremost tooth (6) has a blunt point (8) while the remaining teeth (5) of each row are provided with a tapering point, whereas the blunt end portion (9) of the mandrel (1) is shaped such that, when seeing the mandrel in a frontal view, the point (8) of at least each foremost tooth (6) projects beyond the circumference of that blunt end portion.

2. Device according to claim 1, **characterised** in that each foremost tooth (6) is provided with a flattened point (8), of which the flattening includes an angle of about 60° with the axis of the mandrel (1).

3. Device according to claim 1 or 2, **characterised** in that the mandrel (1) comprises two spaced axially extending metal strips (3, 4) of which one lateral edge is provided with the teeth (5, 6) and of which the opposite lateral edge (7) is inwardly flanged.

4. Device according to claim 3, **characterised** in that the blunt end portion (9) of the mandrel (1) is basically parallelogram-shaped.

## Patentansprüche

1. Vorrichtung zum Räumen der Haut im Halsbereich von geschlachtetem Geflügel, mit einem Kern (1), welcher derart gestaltet ist, daß er gedreht werden kann und durch den Hals des Geflügels vorwärtsbewegt werden kann, und mindestens eine Reihe von Zähnen (5, 6) aufweist, welche in Axialrichtung hintereinander angeordnet sind und schräg nach vorne sowie in Rotationsrichtung des Kerns weisen, wobei der Kern weiter mit einem vorderen, stumpfen Endabschnitt (9) versehen ist, dadurch gekennzeichnet, daß in jeder Reihe von Zähnen der vorderste Zahn (6) eine abgestumpfte Spitze (8) aufweist, während die übrigen Zähne (5) von jeder Reihe mit einer spitz zulaufenden Spitze versehen sind, wobei der stumpfe Endabschnitt (9) des Kerns (1) derart gestaltet ist, daß in der Vorderansicht des Kerns betrachtet zumindest die Spitze (8) des vordersten Zahns (6) über den Umfang des stumpfen Endabschnitts hinausragt.

2. Vorrichtung nach Anspruch 1, dadurch gekennzeichnet, daß jeder der vordersten Zähne (6) mit einer abgeflachten Spitze (8) versehen ist, wobei die Abflachung einen Winkel von etwa 60° mit der Achse des Kerns (1) einschließt.

3. Vorrichtung nach Anspruch 1 oder 2, dadurch gekennzeichnet, daß der Kern (1) zwei im Abstand zueinander angeordnete und sich in Axialrichtung erstreckende Metallstreifen (3, 4) aufweist, von welchen eine Seitenkante mit den Zähnen (5, 6) versehen ist und von welchen die gegenüberliegende Seitenkante (7) einwärts gekrümmt ist.

4. Vorrichtung nach Anspruch 3, dadurch gekennzeichnet, daß der stumpfe Endabschnitt (9) des Kerns (1) im wesentlichen parallelogrammförmig gestaltet ist.

## Revendications

1. Dispositif pour dégager la peau du cou d'une volaille abattue, comprenant un mandrin (1) qui peut être mis en rotation et déplacé vers l'avant dans le cou de la volaille, ledit mandrin comportant au moins une rangée de dents (5,6) disposées axialement les unes derrière les autres et pointant obliquement vers l'avant et dans le sens de rotation du mandrin, le mandrin présentant en outre une partie d'extrémité avant non coupante (9), caractérisé en ce que, dans chaque rangée de dents, la dent avant (6) a une pointe émoussée (8) tandis que les autres dents (5) de chaque rangée ont une pointe effilée, et la partie d'extrémité non coupante (9) du mandrin (1) a une forme telle que, lorsqu'on regarde frontalement le mandrin , la pointe (8) d'au moins chaque dent avant (6) fait saillie au-delà de la circonférence de cette partie d'extrémité non coupante.

2. Dispositif suivant la revendication 1, caractérisé en ce que chaque dent avant (6) présente une pointe aplatie (8) dont la partie plate définit un angle de 60° environ avec l'axe du mandrin (1).

3. Dispositif suivant la revendication 1 ou 2, caractérisé en ce que le mandrin (1) comprend deux bandes de métal espacées s'étendant axialement (3,4) dont un bord latéral comporte les dents (5,6) et dont le bord latéral opposé (7) est plié vers l'intérieur.

4. Dispositif suivant la revendication 3, caractérisé en ce que la partie d'extrémité noncoupante (9) du mandrin (1) est sensiblement en forme de parallélogramme.
